Europäisches Patentamt

European Patent Office

Office européen des brevets

(11) Publication number: **0 001 169**

A1

# EUROPEAN PATENT APPLICATION

(21) Application number: 78300339.5

(22) Date of filing: 04.09.78

(51) Int. Cl.²: **A 63 C 15/06**
**F 16 G 11/00**

(30) Priority: 03.09.77 GB 36891/77

(43) Date of publication of application:
21.03.79 Bulletin 79/6

(84) Designated contracting states:
CH DE FR GB NL SE

(71) Applicant: Jenkins, Phillip John
Oamaru Down End
Croyde North Devon(GB)

(84) Designated contracting states:
CH DE FR GB NL SE

(71) Applicant: Fisher, John Walter
Ash Mill Ashreigney
Chulmleigh North Devon(GB)

(84) Designated contracting states:
CH DE FR GB NL SE

(72) Inventor: Jenkins, Phillip John
Oamaru Down End
Croyde North Devon(GB)

(71) Applicant: Fisher, John Walter
Ash Mill Ashreigney
Chulmleigh North Devon(GB)

(74) Representative: Stephens, Michael John
M.J. Stephens & Co. Royal Building
11 St. Andrew's Cross
Plymouth Devon PL1 2DS(GB)

(54) Surfboard harness and towing attachment.

(57) A harness device for attaching a towing line (17) to a surfboard (20) has an automatic release mechanism which operates to disconnect the surfboard from the line if the surfboard should turn over or become inclined to the length of the line by more than a predetermined threshold angle. The automatic release mechanism includes an enlarged head (18), for example, spherical or cylindrical, which is lodged into a coupling socket (14) in the underside of the board, the socket having a narrow mouth or lip (15) behind which the head lodges if the inclination of the line to the general plane of the surfboard is sufficiently small, while allowing the head to disengage from the socket if this inclination increases to an angle beyond the threshold inclination. Handles joined to the towing line may also be incorporated into the harness.

Fig. 1

Croydon Printing Company Ltd.

- 1 -

<u>Surfboard Harness and Towing Attachment</u>

The present invention relates to a surfboard harness
and towing attachment device which makes it possible for
a surfboard to be towed safely behind a towing vessel.

Although water ski-ing is very popular it is unavailable
as a sport to many people as it requires the use of a
very powerful boat in order to draw the skier through the
water because it is only the planing effect of the ski or
skis on the water which maintains the skier on the surface
and unless a certain minimum speed is maintained the skier
sinks. In this sport the tow boat is equipped with a
towing line provided at its free end with a gripping handle.
The skis themselves are attached by suitable bindings to the
feet of the wearer. The skis are not usually buoyant, and
certainly do not provide sufficient flotation for the skier
when static in the water. It may be, therefore, that if a
skier loses his or her balance and is forced to release the
towing line he or she may be in some difficulty until the
towing boat returns.

The sport of surfing has become very popular recently
but suffers from the disadvantage that suitable wave
conditions are not available at all times, nor at very many
locations and cannot be enjoyed on inland waterways, lakes
or reservoirs.

It is the primary object of the present invention to
permit greater utilisation of a surfboard, which is a
relatively expensive item.

Another object of the present invention is to provide
an attachment device for connecting a towing line to a
surfboard.

0001169

A further object of the invention is to provide a safety attachment device for connecting a towing line to a surfboard so that should the rider fall from the surfboard the latter will not continue to be towed behind the towing boat since it could then turn upwide down or sideways and snake on the surface of the water or, more dangerously, beneath the water.

In order to achieve these and other objects which will become apparent from the following description, the invention provides an attachment device for connecting a towing line to a surboard comprising: means defining a socket-like recess on a surface of said surfboard; enlarged head means on the coupling end of said towing line; said socket-like recess on said surface of said surfboard being shaped to permit driving engagement of said enlarged head means therein for towing said surfboard with said line, the shape of said socket-like recess defining an angular threshold between said towing line and the general plane of said surface of said surfboard beyond which driving engagement of said enlarged head is broken and automatic release of said coupling takes place.

Should the rider fall off and the board turn over, any tendency for the board to dive or swing so that its general plane becomes substantially inclined to the line of action of the towing line, the attachment will release automatically.

Preferably the attachment includes an enlarged head which may be formed on or attachable to a towing line and is engageable in an undercut socket-like recess formed by an insert element in the bottom of the surfboard. In a simple

- 3 -

embodiment the attachment head is a substantially spherical ball secured to the end of the line, although in a preferred embodiment the attachment head is a substantially cylindrical rigid cup-like member.

The present invention also comprehends a surfboard adapted for receiving an attachment as defined above, in which the undersurface of the board has an undercut recess for receiving the enlarged head either at the front or nose end of the board or at the point spaced from the front or nose end of the board, either on the upper face or the lower face thereof. In one embodiment the socket-like recess has a spring clip operable as a detent to retain the enlarged head in the socket when fitted therein, but the force of which can be overcome to allow the head to be released if the angle of inclination of the towing line increases to a value greater than the said angular threshold, although in the preferred embodiment release of the head is effected when a substantially cylindrical head is brought within a range of positions in which it is sufficiently nearly aligned with the axis of the socket to be pulled through a circular mouth opening thereof by the tension in the line.

In a simple case the enlarged head may simply be a figure of eight knot which is lodged in the undercut recess in the board when the connection is made. This, however, is not the preferred arrangement since a knot in the line might foul against the spring clip thereby preventing proper release, and almost certainly would not turn within the undercut socket-like recess with the facility required to ensure free and easy movement.

- 4 -

0001169

A device formed as an embodiment of the present invention thus permits a surfboard to be towed behind a boat to enable a rider to gain experience of standing on the board in circumstances where there is not adequate surf for practice in the usual manner and for lengths of time greater than can usually be experienced when riding waves which are necessarily of limited duration. Because the surfboard has sufficient buoyancy to support the rider it is not necessary to tow the surfboard as fast as conventional water skis which rely on the planing effect to maintain the rider above the surface.

Moreover, because of this flotation a surfboard offers less resistance to movement than conventional water skis so that a boat of very much lower power can be used and nevertheless achieve a satisfactory ride. For improving balance, particularly for inexperienced users, the present invention also provides a harness attachable to a surfboard for towing purposes, incorporating an attachment for connecting a towing line to a given point on the surfboard and at least one branch line having a handle which can be held by a rider on the surfboard.

There may further be provided a spreader between the towing line and the branch line such that, in use, the branch line can be held approximately parallel to that section of the towing line between its junction with the branch line and the attachment device for connection to the surfboard. Thus, although the branch line may be relatively short, the direction of the force exerted on the hand of a user can nevertheless be in approximately the same direction as if the handles were attached to a towing line directly. This avoids any tendency for a downward pull on the user, and because of the tensioner, the user by leaning backwards, and applying pressure with his feet, can release the tension in that section of the towing line between its junction with the branch line and the connection to the surfboard so that the surfboard is in fact being displaced by the frictional force exerted through the feet of the user. This simulates water ski-ing to a greater extent since the traction is transmitted through the handle held by the rider. Embodiments without the spreader bar have a greater adaptability since the continuity of the line, either from the boat to the surfboard attachment, or from the boat to the handle, can be changed simply by changing the relative tensions on each by pulling more or less hard on the handle.

Further features and advantages of the present invention will become apparent from a study of the following description in which reference is made to the accompanying drawings, which are provided purely by way of non-restrictive example.

Figure 1 is a sectional view of part of a surfboard showing the attachment of a towing line thereto;

Figure 2 is a diagrammatic view of a surfboard harness formed as an embodiment of the present invention;

Figure 3 is a schematic diagram illustrating an alternative form of harness; and

Figure 4 is a cross sectional view of a modified form of coupling device.

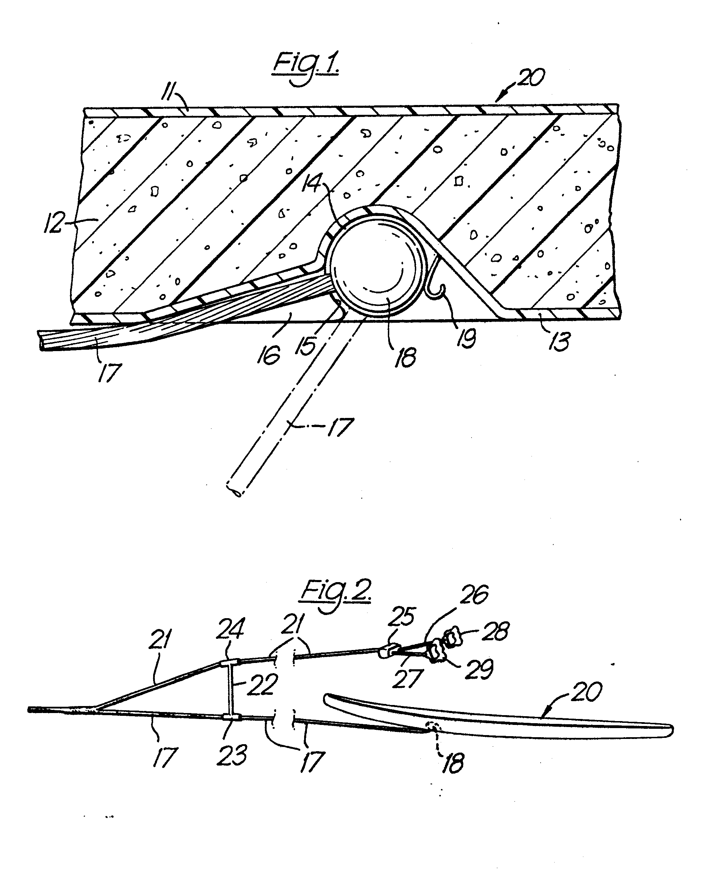

Referring now to Figure 1, there is shown a section of a surfboard comprising an upper waterproof skin 11, a cellular filling 12 and a lower waterproof skin 13.

In the lower face of the surfboard is a recess, generally indicated 14 which has an undercut wall 15 and a communicating slot 16. A towing line such as that illustrated 17 having at the free end thereof a ball 18 is connected to the surfboard by inserting the ball 18 into the recess 14 and positioning the towing line 17 in the communicating slot 16. A detent spring 19 is carried on one wall of the recess 14 to assist in retaining the towing ball in position when the line 17 is slack.

In use of the device illustrated a surfboard may be towed by the towing line 17 and while a rider is standing or sitting on the surfboard his weight and balance maintains the surfboard in an upright orientation so that the tension applied along the lines 17 maintains the ball 18 in contact with the undercut wall 15 of the recess 14 so that the traction can be transmitted to the surfboard. If the line 17 is slack the ball 18 is nevertheless retained in the recess 14 by the spring 19. If the rider should fall off the surfboard, however, there is no risk that the surfboard could turn sideways or upside down, or could snake from side to side causing a danger since the tow ball 18 will be released from the recess 14 when the inclination of the line 17 reaches the angle illustrated in broken outline in Figure 1 thereby releasing the towing line from the surfboard.

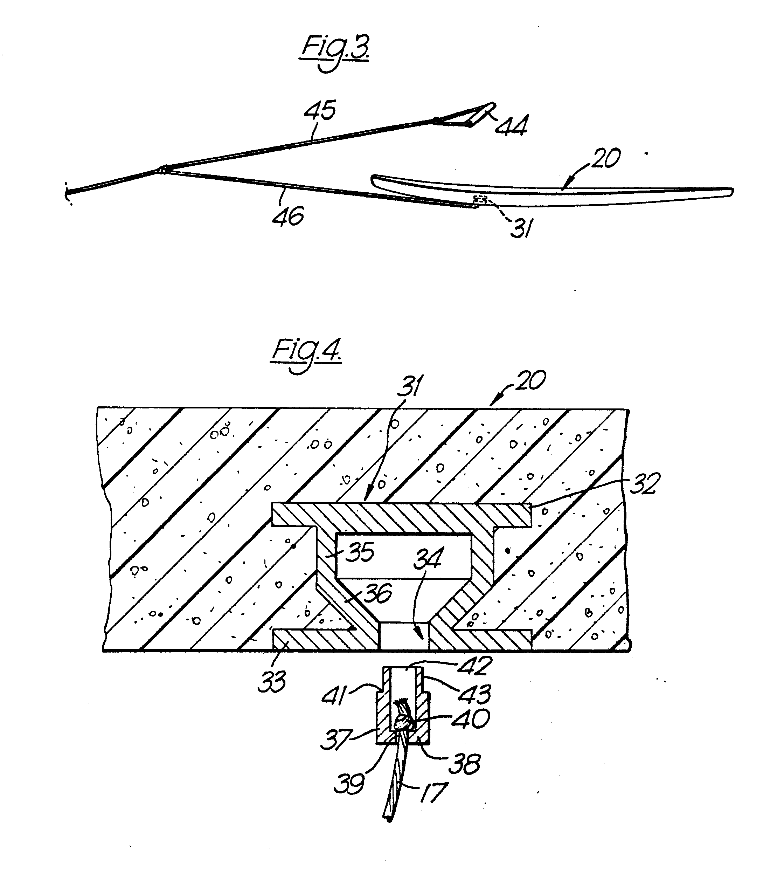

In Figure 2 the full harness for use in riding a surfboard behind a tow boat is illustrated. In Figure 2 the surfboard is generally indicated 20 and it can be seen that the attachment ball 18 in the recess 14 is positioned between one quarter and one third of the length of the surfboard from

0001169

the forward end thereof. Attached some distance from the attachment ball 18 along the line 17 is a branch line 21 which is held spaced from the towing line 17 by a light spreader bar 22 rigidly connected to the towing line 17 and the branch line 21 at two points 23, 24 respectively. The branch line is provided with a junction block 25 from which lead two hand lines 26, 27 to the free ends of which are attached respective handles 28, 29 to be gripped by a user standing on the surfboard. In use of the harness the user may merely stand on the surfboard and allow himself to be towed solely by the tension in the line 17, riding the surfboard using balance only in the same way as when surfing except that the two handles 28, 29 will be held loosely. They may, alteratively, be discarded if required. The handles 28, 29 are useful, however, in assisting balance since a light tension can be applied to them for this purpose. Alternatively, by pressing forwardly with the feet, a user can transfer the tension from the towing line 17 entirely to the branch line 21 so that that section of the towing line 17 between the coupling ball 18 and the junction with the branch line 21 is slack. In these circumstances the towing line 17 from the boat to its junction with the branch line 21 is raised to be approximately in line with the branch line 21.

Referring now to Figure 4 the embodiment shown comprises an insert element 31 which is incorporated into the bottom of a surfboard when the board is being made. The element comprises two generally parallel circular flange portions 32, 33 the latter of which has a circular hole 34

0001169

therein. Joining the two parallel circular flange portions 32, 33 is a substantially cylindrical body portion 35 which is closed at one end by the transverse flange portion 32 and which is joined to the other circular flange portion 33 which has the circular opening 34 by a substantially conical wall portion 36.

When incorporated in the body of a surfboard the flange 33 with the opening 34 is mounted flush with the bottom surface of the board and the projection of the flange 32 provides a security against the socket 31 being ripped out of the board by any forces which may be applied thereto during use.

The enlarged head means which cooperates with the socket-like recess 31 is in the form of a substantially cylindrical body 37 having a transverse closure wall 38 with the small opening 39 therein through which passes the line 17, a knot 40 being tied at the end to retain the line 17 within the interior of the enlarged head member 37. A shoulder 41 is formed adjacent the open end 42 of the enlarged head member to provide a portion 43 of reduced diameter for assisting in locating the head member in the opening 34 in the socket since the cylindrical portion 37 thereof has substantially the same diameter as the diameter of the hole 34.

In use of the device the enlarged head 37 is located in the opening 34 and pushed through, being a sliding fit therein. Once within the interior of the socket-like recess the enlarged head end 37 does not pull out through the opening 34 since it is not, except in special circumstances aligned with this opening and towing engagement between the surfboard and the line 17 is thus effected. Moreover, the surfboard can be positioned facing in any direction with respect to the line 17 providing the angle between the line 17 and the general plane of the surfboard remains below a predetermined threshold value. If, on the other hand, the rider should fall off the surfboard and this start to paravane, that is turn broadside on to the towing direction, the conical surface 36 guides the enlarged head 37 into the mouth of the opening 34 and the slight resilience of the lips of the mouth 34 allow the enlarged head 37 to be pulled through the opening releasing the towing connection.

Figure 3 illustrates an alternative form of harness incorporating the attachment device illustrated in Figure 4, a single handle 40 is attached by a handle line 41 to a towing line 42 with a "soft" or knotted connection which gives greater flexibility in use since the handle 40 can be pulled tightly, in which case the line from the towing boat to the handle 40 is practically straight, or tension can be released to an extent such that the line 42 is practically straight from the towing boat to the surfboard 20.

CLAIMS

1. An attachment device for attaching a towing line to a surfboard, characterised in that the device comprises enlarged head means (18; 37) on the coupling end of said towing line (17; 42) and a socket-like recess (14; 31) on a surface of the surfboard (20), said recess being shaped to permit driving engagement of said enlarged head means therein for towing the surfboard by means of said line, and the shape of said socket-like recess defining an angular threshold between said towing line and the general plane of said surface of said surfboard beyond which driving engagement of said head means in said recess ceases and automatic release of the head means from the recess takes place.

2. An attachment device as claimed in Claim 1, characterised in that said enlarged head means (18) on said line is substantially spherical and the front wall of said socket-like recess (14) is circularly curved with a radius of curvature which is substantially the same as that of said substantially spherical enlarged head means.

3. An attachment device as claimed in Claim 2, characterised in that the rear wall of said socket-like recess (14) is substantially planar and tangential to said circularly curved front wall.

0001169

4. An attachment device as claimed in Claim 1, or Claim 2, or Claim 3, characterised by resilient detent means (19) for retaining said enlarged head means (18) in said socket-like recess(14).

5. An attachment device as claimed in Claim 1, characterised in that the socket-like recess (31) has a substantially cylindrical wall portion (35) closed at one end by a transverse wall (32), an annular wall (33) having a generally circular mouth opening (34) at the end of said substantially cylindrical wall portion opposite said one end thereof, and characterised in that the enlarged head means comprise a substantially cylindrical element (3.7) attachable to said towing line (17) and having a diameter substantially equal to that of said generally circular mouth opening (34), whereby said head means can be inserted into said socket-like recess through said mouth opening when the axis of said cylindrical element is aligned with the axis of said substantially cylindrical wall portion.

6. An attachment device as claimed in Claim 5, characterised in that at least said annular wall (33) defining said generally circular mouth opening (34) is made of a resilient material whereby the enlarged head means can be inserted through said mouth opening into said socket-like recess to be retained therein in driving engagement,

- 3 -

0001169

provided the towing line (17) is inclined to the axis of said substantially cylindrical wall portion (35) by an angle greater than a predetermined threshold.

7. An attachment device as claimed in Claim 6, characterised in that the socket-like recess has a substantially conical wall portion (36) between said generally circular mouth opening (34) and said substantially cylindrical wall portion (35), the inclination of said conical wall portion to the axis of said substantially cylindrical wall portion defining said angular threshold.

8. A towing harness for a surfboard, characterised in that the harness comprises means (14, 18) attaching one end of a line (17;42) to a surfboard (20), and a branch line (21;41) joined to the towing line at a distance from said one end thereof, the branch line terminating in at least one manually grippable handle (28, 29; 40) for a rider on said surfboard.

9. A towing harness as claimed in Claim 8, characterised by line spreader means (22) between said towing line (17) and said branch line (21), the line spreader means being attached to said towing line at a point between the junction thereof with said branch line and said one end thereof, and being attached to said branch line at a point between the junction thereof with said towing line and said handle or handles (28, 29: 40).

10. An attachment device for attaching a towing line to a surfboard, characterised in that the device comprises a socket-like recess (14; 31) at or near the nose of the surfboard (20), enlarged head means (18; 37) on the coupling end of said towing line (17), the socket-like recess (14;31) being shaped such that it affords driving engagement with said enlarged head means when fitted therein for towing said surfboard with said line.

11. An attachment device according to any of Claims 1 to 7 or 10 in combination with a towing line, means for attaching said towing line to a towing boat, and a second line having at one end thereof at least one manually grippable handle and at the other end thereof means for attachment of the second line to said towing boat.

_Fig.1._

_Fig.2._

0001169

**Fig.3.**

45 · 44 · 20 · 46 · 31

**Fig.4.**

31 · 20 · 32 · 35 · 34 · 36 · 33 · 42 · 43 · 41 · 40 · 37 · 38 · 39 · 17

| | European Patent Office | **EUROPEAN SEARCH REPORT** | Application number |
|---|---|---|---|
| | | | EP 78 30 0339 |

| **DOCUMENTS CONSIDERED TO BE RELEVANT** | | | **CLASSIFICATION OF THE APPLICATION (Int. Cl.²)** |
|---|---|---|---|
| Category | Citation of document with indication, where appropriate, of relevant passages | Relevant to claim | |
| X | <u>US - A - 3 802 374</u> (BROWN)<br>* Figures 2-5; columns 1-4 * | 1,5,6,<br>10 | A 63 C 19/06<br>F 16 G 11/00 |
| X | <u>US - A - 3 380 425</u> (WILSON)<br>* Figures 1-14; columns 1,2 * | 1-3 | |
| | <u>AU - B - 480 072</u> (NEWLAND)<br>* Figures 1-4; pages 2-6; claim 1 * | 1,3,10 | **TECHNICAL FIELDS SEARCHED (Int.Cl.²)** |
| | <u>US - A - 2 946 305</u> (HILL)<br>* Figures 1-4; column 2, lines 50-72; column 3; column 4, lines 1-18 * | 1,5,8,<br>9,10,11 | A 63 C<br>F 16 G |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-12-1978 | NOESEN |

EPO Form 1503.1 06.78